# EUROPEAN PATENT APPLICATION

(11) **EP 4 618 228 A1**
(43) Date of publication of application: **17.09.2025**
(21) Application number: 23887796.3
(22) Date of filing: 27.10.2023
(51) Int. Cl.: H01M 10/42, H01M 4/48

(54) **LITHIUM SUPPLEMENTING MATERIAL, AND PREPARATION METHOD THEREFOR AND USE THEREOF**

(30) Priority: 09.11.2022 CN 202211399493
(71) Applicant: Shenzhen Innovazone Technology Co., Ltd., Shenzhen, Guangdong 518000 (CN)
(72) Inventor: PEI, Xianyinan, Shenzhen, Guangdong 518000 (CN); WAN, Yuanxin, Shenzhen, Guangdong 518000 (CN); KONG, Lingyong, Shenzhen, Guangdong 518000 (CN); LAI, Jiayu, Shenzhen, Guangdong 518000 (CN); CHEN, Xinyi, Shenzhen, Guangdong 518000 (CN); ZHANG, Li, Shenzhen, Guangdong 518000 (CN); ZHONG, Wen, Shenzhen, Guangdong 518000 (CN)
(74) Representative: Mathys & Squire
(86) International application number: PCT/CN2023/127143
(87) International publication number: WO 2024/099106

(57) **Abstract**

A lithium-supplementing material, a preparation method therefor, and application thereof are provided in the present disclosure. The lithium-supplementing material is applied to a cathode plate and a cell. A chemical formula of the lithium-supplementing material is Liₓ₋ₙₐAₐM_{y}O_{z}, where A is selected from other metal elements except lithium (Li), M is selected from at least one transition metal element, and 1 < x ≤ 8, y > 0, 0 < z < 6, 1 ≤ n ≤ 4, 0 < a ≤ 2. In the present disclosure, lithium atoms that are unable to participate in a lithium-supplementing process are replaced with other metals, so that the high lithium-supplementing efficiency is maintained, the cost of the lithium-supplementing material is significantly reduced, and the quick deintercalation of lithium ions can be achieved.

## Description

### CROSS-REFERENCE TO RELATED APPLICATION(S)

This application claims priority to Chinese Patent Application No. 202211399493.1, filed with the China National Intellectual Property Administration on November 09, 2022, the entire disclosure of which is hereby incorporated by reference.

### TECHNICAL FIELD

This disclosure relates to the field of cell technology, and in particular, to a lithium-supplementing material, a preparation method therefor, and application thereof.

### BACKGROUND

During first charging and discharging of a cell, such as a lithium-ion secondary cell, a large number of solid electrolyte interphase (SEI) films are formed on a surface of an anode of the cell. As a result, limited lithium ions and electrolytes in the cell are consumed, causing irreversible capacity loss, reducing energy density of the lithium-ion secondary cell, and reducing charging and discharging efficiency of an electrode material. In addition, by using cathode lithium-supplementing additive as a lithium-ion supplementing material, lithium is introduced to the interior of the cell before the lithium-ion cell operates so as to supplement lithium ions. However, during practical use, a part of lithium in the cathode lithium-supplementing additive is not deintercalated, and substantially does not participate in a lithium-supplementing process. As a result, a lithium element is wasted, which is not conducive to promotion and application of the cathode lithium-supplementing additive.

### SUMMARY

A lithium-supplementing material, a preparation method therefor, and application thereof are provided in the present disclosure, to address a problem of lithium-element waste.

In a first aspect, a lithium-supplementing material is provided in the present disclosure. A chemical formula of the lithium-supplementing material is Liₓ₋ₙₐAₐM_{y}O_{z}, where A is selected from other metal elements except lithium (Li), M is selected from at least one transition metal element, and 1 < x ≤ 8, y > 0, 0 < z < 6, 1 ≤ n ≤ 4, 0 < a ≤ 2.

In the present disclosure, lithium atoms that are unable to participate in a lithium-supplementing process are replaced with other metals. On the one hand, Liₓ₋ₙₐAₐM_{y}O_{z} can achieve the same lithium-supplementing effect as LiₓM_{y}O_{z}. After lithium supplementation by the lithium-supplementing material, the product is a compound with a small amount of lithium or without lithium, which will not cause a great waste of lithium. Thanks to the lithium-supplementing material provided in the present disclosure, the lithium-supplementing effect cannot be lost, the cost of the lithium-supplementing material can be significantly reduced, the high cost-effective lithium-supplementing material can be formed, and the price threshold of the lithium-supplementing material can be lowered. Therefore, it is conducive to the promotion of cathode lithium-supplementing additive and the development and progress of new energy industry. On the other hand, by screening A, the atomic radius of A is larger than the atomic radius of Li, and small-volume lithium atoms that are unable to participate in the lithium-supplementing process are replaced with large-volume A atoms. Therefore, during the preparation of the lithium-supplementing material, it is more conducive for lithium to enter the reaction system to form a Liₓ₋ₙₐAₐM_{y}O_{z} structure. Meanwhile, during the use of the lithium-supplementing material, the larger atomic radius of A makes it easier for lithium to be deintercalated to perform lithium supplementation.

In an implementation, A includes at least one member selected from the group consisting of sodium (Na) and potassium (K). The chemical formula of the lithium-supplementing material is Liₓ₋ₐAₐM_{y}O_{z}.

In the present disclosure, the lithium atoms that are unable to participate in the lithium-supplementing process can be replaced with alkali metals such as Na and/or K which is less expensive. On the one hand, Liₓ₋ₐAₐM_{y}O_{z} can achieve the same lithium-supplementing effect as LiₓM_{y}O_{z}. In the lithium-supplementing material, Na, K, and Li all have a valency of +1, possessing the same valence state. Na, K, and Li have similar properties. When Li is replaced with Na and/or K, there is minimal change in the properties of the lithium-supplementing material, and at least four lithium ions in the lithium-supplementing material can be used for lithium supplementing to a cell system. Meanwhile, after lithium supplementation by the lithium-supplementing material, the product is a sodium or potassium compound with a small amount of lithium or without lithium. Compared to Li, Na and K are less expensive, so even if Na and K are merely used as the structural support, there will be no significant waste. Thanks to the lithium-supplementing material provided in the present disclosure, the lithium-supplementing effect cannot be lost, the cost of the lithium-supplementing material can be significantly reduced, the high cost-effective lithium-supplementing material can be formed, and the price threshold of the lithium-supplementing material can be lowered. Therefore, it is conducive to the promotion of cathode lithium-supplementing additive and the development and progress of the new energy industry. On the other hand, since each of the atomic radius of Na and the atomic radius of K is larger than the atomic radius of Li, and the small-volume lithium atoms that are unable to participate in the lithium-supplementing process are replaced with large-volume Na and/or K atoms, during the preparation of the lithium-supplementing material, it is more conducive for lithium to enter the reaction system to form the Liₓ₋ₐAₐM_{y}O_{z} structure. Meanwhile, during the use of the lithium-supplementing material, Na of the large atomic radius and K of the large atomic radius make it easier for lithium to be deintercalated to perform lithium supplementation.

In an implementation, the chemical formula of the lithium-supplementing material is Li₅₋ₐAₐMO₄, a ≤ 1, and M includes at least one member selected from the group consisting of iron (Fe), cobalt (Co), nickel (Ni), manganese (Mn), aluminum (Al), chromium (Cr), gallium (Ga), indium (In), lanthanum (La), and bismuth (Bi).

In an implementation, a crystal structure of the lithium-supplementing material is identical to a crystal structure of Li₅MO₄.

In an implementation, an intrinsic density of the lithium-supplementing material ranges from 2 g/cm³ to 3.5 g/cm³.

In an implementation, a bandgap energy of the lithium-supplementing material ranges from 1 eV to 4 eV

In an implementation, a unit cell volume of the lithium-supplementing material ranges from 300 Å³ to 500 Å³.

In an implementation, a unit cell of the lithium-supplementing material consists of forty atoms.

In an implementation, the chemical formula of the lithium-supplementing material is Li₄AMO₄. A particle size of the lithium-supplementing material ranges from 0.1 µm to 100 µm.

In an implementation, a minimum deintercalation voltage of the lithium-supplementing material is lower than a minimum deintercalation voltage of Li₅MO₄. The minimum deintercalation voltage of the lithium-supplementing material refers to a minimum voltage for deintercalation of four lithium ions from the lithium-supplementing material. The minimum deintercalation voltage of Li₅MO₄ refers to a minimum voltage for deintercalation of four lithium ions from Li₅MO₄.

In a second aspect, a preparation method for a lithium-supplementing material is provided in the present disclosure. The preparation method for a lithium-supplementing material includes the following. An A-metal source is mixed with an iron source and a lithium source to obtain a solid I. Under an inert gas atmosphere, the solid I is heated to 800 °C - 900 °C for 12 hours - 36 hours, and the solid I heated is cooled to obtain Liₓ₋ₙₐAₐM_{y}O_{z} after heating.

In an implementation, A includes at least one member selected from the group consisting of Na and K. The A-metal source is at least one of a sodium source or a potassium source. The preparation method for a lithium-supplementing material includes the following. At least one of the sodium source or the potassium source is mixed with the iron source and the lithium source to obtain the solid I. Under an inert gas atmosphere, the solid I is heated to 800 °C - 900 °C for 12 hours - 36 hours, and the solid I heated is cooled to obtain Liₓ₋ₐAₐFeO₄ after heating.

In an implementation, the iron source includes one of or a combination of at least two of ferric sulfate, ferric nitrate, ferric chloride, ferric citrate, ferric hydroxide, or ferric oxide.

In an implementation, the sodium source includes one of or a combination of at least two of sodium chloride, sodium carbonate, sodium hydroxide, sodium bicarbonate, sodium sulfate, sodium nitrate, or sodium oxide.

In an implementation, the potassium source includes one of or a combination of at least two of potassium chloride, potassium carbonate, potassium hydroxide, potassium bicarbonate, potassium sulfate, potassium nitrate, or potassium oxide.

In an implementation, the lithium source includes one of or a combination of at least two of lithium hydroxide, lithium oxide, lithium chloride, lithium nitrite, lithium nitrate, lithium oxalate, lithium carbonate, or lithium acetate.

In an implementation, a heating rate for heating the solid I ranges from 1 °C/min to 10 °C/min.

In a third aspect, a cathode plate is provided in the present disclosure. The cathode plate includes the lithium-supplementing material of any one of the above implementations, or includes a lithium-supplementing material prepared by the preparation method for a lithium-supplementing material of any one of the above implementations.

In a fourth aspect, a cell is provided in the present disclosure. The cell includes the above cathode plate, or includes the above lithium-supplementing material, or includes a lithium-supplementing material prepared by the above preparation method for a lithium-supplementing material.

In the present disclosure, lithium atoms that are unable to participate in the lithium-supplementing process are replaced with metals such as Na and/or K which is less expensive. On the one hand, Liₓ₋ₙₐAₐM_{y}O_{z} has a good lithium-supplementing effect. Meanwhile, lithium in the lithium-supplementing material has a high utilization rate, and after lithium supplement by the lithium-supplementing material, the product contains less lithium or does not contain lithium, thereby reducing lithium waste, and significantly reducing the cost of the lithium-supplementing material. On the other hand, during the use of the lithium-supplementing material, a metal element with a large atomic radius makes it easier for lithium to be deintercalated to perform lithium supplementation.

### BRIEF DESCRIPTION OF THE DRAWINGS

To describe the technical solutions in embodiments of the present disclosure more clearly, the accompanying drawings required for describing the embodiments of the present disclosure are described below.
FIG. 1 is an X-ray Diffraction (XRD) spectrum of a lithium-supplementing material provided in an implementation of the present disclosure and Li₅FeO₄.
FIG. 2 is scanning electron microscope (SEM) image of a Li_{4.5}Na_{0.5}FeO₄ material provided in a first embodiment of the present disclosure.
FIG. 3 is a charging curve diagram of a lithium-ion cell provided in each of embodiments 1 - 3 and a comparative example 1.
FIG. 4 is a charging curve diagram of a full cell provided in the first embodiment of the present disclosure.

### DETAILED DESCRIPTION

The following describes the technical solutions in embodiments of the present disclosure with reference to the accompanying drawings in the embodiments of the present disclosure. Apparently, the described embodiments are merely some of rather than all of the embodiments of the present disclosure.

Herein, the terms "first", "second", etc., are only used for descriptive purposes, rather than being understood as indicating or implying relative importance or implicitly indicating the number of indicated technical features. Therefore, the features defined by "first" and "second" may explicitly or implicitly include one or more of the features. In the description of the present disclosure, unless otherwise specified, "multiple" means two or more.

In addition, orientational terms such as "upper", "lower", etc., are defined herein with respect to the orientation in which a structure is placed in the accompanying drawings. It may be understood that, these orientational terms are relative concepts, which are used for relative description and clarification, and may vary accordingly according to variations in the orientation in which the structure is placed.

For ease of understanding, English abbreviations and related technical terms involved in the embodiments of the present disclosure are first explained and described below.

SEI film: Solid Electrolyte Interphase, i.e., solid electrolyte interphase film.

SP: Super P, conductive carbon black, which is a conductive agent.

PVDF: poly(vinylidene fluoride), which is a binding agent.

NMP: 1-Methyl-2-pyrrolidinone, also known as N-Methyl-2-pyrrolidinone, which is a solvent.

During a first charging and discharging of a cell, such as a lithium-ion secondary cell, a large number of solid electrolyte interphase (SEI) films are formed on a surface of an anode of the cell. As a result, limited lithium ions and electrolytes in the cell are consumed, causing irreversible capacity loss, reducing energy density of the lithium-ion secondary cell, and reducing charging and discharging efficiency of an electrode material. In addition, by using cathode lithium-supplementing additive as a lithium-ion supplementing material, lithium is introduced to the interior of the cell before the lithium-ion cell operates to supplement lithium ions. On the one hand, the demand for a lithium source is large, the cost is high, and the price threshold of the cathode lithium-supplementing additive is improved. On the other hand, in practical use, a part of lithium in the cathode lithium-supplementing additive is not deintercalated, and substantially does not participate in a lithium-supplementing process. As a result, the lithium element is wasted, which is not conducive to promotion and application of the cathode lithium-supplementing additive.

The present disclosure provides a lithium-supplementing material. The lithium-supplementing material is applied to a cathode of a cell, so that the cathode is pre-lithiated, and lithium is added to the interior of the cell to supplement lithium ions before the cell operates. In an implementation, when the lithium-supplementing material is applied, the lithium-supplementing material may be coated on an outer surface of a cathode of a cell, or the lithium-supplementing material may be embedded in the outer surface of the cathode of the cell. In other implementations, the lithium-supplementing material may be added during the preparation of the cathode of the cell, so that the lithium-supplementing material is dispersed to the outer surface and the interior of the cathode of the cell.

The lithium-supplementing material has a high lithium content, and lithium (Li) of the lithium-supplementing material can be released and migrates to an anode of a cell during the first charging process. Therefore, irreversible lithium loss caused by the formation of the SEI film can be offset, thereby improving the total capacity and energy density of the cell.

In the present disclosure, a chemical formula of the lithium-supplementing material is Liₓ₋ₙₐAₐM_{y}O_{z}, where A is selected from other metal elements except Li, M is selected from at least one transition metal element, and 1 < x ≤ 8, y > 0, 0 < z < 6, 1≤ n ≤ 4, 0 < a ≤ 2. n is a valence state of element A in Liₓ₋ₙₐAₐM_{y}O_{z}.

In the related art, a chemical formula of a lithium-supplementing material is generally LiₓM_{y}O_{z}. During use of the lithium-supplementing material LiₓM_{y}O_{z}, only a part of lithium may be deintercalated to form active lithium ions so as to supplement lithium to a cell system, and the rest of lithium serves as a structural support of the material and substantially does not participate in a lithium-supplementing process, so that lithium utilization rate is low. In the present disclosure, other metal elements are doped at Li-site. On the one hand, Liₓ₋ₙₐAₐM_{y}O_{z} can achieve the same lithium-supplementing effect as LiₓM_{y}O_{z}. On the other hand, if cheaper metal elements are used as A, after lithium supplementation by the lithium-supplementing material, the product does not contain lithium or contains little lithium, so that the cost of the lithium-supplementing material is significantly reduced, the high cost-effective lithium-supplementing material is formed, and the price threshold of the lithium-supplementing material is lowered. Therefore, it is conducive to the promotion of the cathode lithium-supplementing additive and the development and progress of new energy industry. Furthermore, if a metal element with a larger volume than lithium is used as A, during the preparation of the lithium-supplementing material, it is more conducive for lithium to enter the reaction system to form a Liₓ₋ₙₐAₐM_{y}O_{z} structure during the preparation of the lithium-supplementing material. Meanwhile, during the use of the lithium-supplementing material, A with the large atomic radius makes it easier for lithium to be deintercalated to perform lithium supplementation.

In an implementation, A includes at least one member selected from the group consisting of sodium (Na) and potassium (K). The chemical formula of the lithium-supplementing material is Liₓ₋ₐAₐM_{y}O_{z}.

When A is selected from a Na element, the chemical formula of the lithium-supplementing material is Liₓ₋ₐNaₐM_{y}O_{z}. When A is selected from a K element, the chemical formula of the lithium-supplementing material is Liₓ₋ₐKₐM_{y}O_{z}. When A is selected from Na elements and K elements, the chemical formula of the lithium-supplementing material is Liₓ₋ₐNaₐ₁Kₐ₂M_{y}O_{z}, where a = a1 + a2.

In an implementation, the chemical formula of the lithium-supplementing material may be Li₅₋ₐAₐFeO₄, Li₆₋ₐAₐMnO₄, Li₆₋ₐAₐCoO₄, Li₆₋ₐAₐZnO₄, or the like.

A chemical formula of a lithium-supplementing material in the related art is generally LiₓM_{y}O_{z}. The lithium-supplementing material in the related art does not contain Na and K atoms. During use of the lithium-supplementing material, only a part of lithium may be deintercalated to form active lithium ions so as to supplement lithium to the cell system. The rest of lithium serves as the structural support of the material, and substantially does not participate in the lithium-supplementing process, so that the lithium utilization rate is low. For example, for a lithium-supplementing material Li₅FeO₄, four lithium ions may be released from each molecule in the lithium-supplementing process, where the equation is as follows: Li₅FeO₄ → 4Li⁺ + 4e⁻ + LiFeO₂ + O₂. For each Li₅FeO₄ molecule, only four lithium ions can be used, while one remaining lithium ion does not participate in the lithium-supplementing process. In other words, when Li₅FeO₄ is used as the lithium-supplementing material, only about 80% of lithium will be deintercalated to form active lithium ions so as to supplement lithium to the cell system, and about 20% of lithium that remains serves as the structural support of the material and substantially does not participate in the lithium-supplementing process, resulting in lithium waste.

However, in the present disclosure, lithium atoms that are unable to participate in the lithium-supplementing process are replaced with alkali metals such as Na and/or K which is less expensive. On the one hand, Liₓ₋ₐAₐM_{y}O_{z} can achieve the same lithium-supplementing effect as LiₓM_{y}O_{z}. In the lithium-supplementing material, Na, K, and Li all have a valency of +1, possessing the same valence state. Na, K, and Li have similar properties. When Li is replaced with Na and/or K, there is minimal change in the properties of the lithium-supplementing material. For example, when the chemical formula of the lithium-supplementing material is Li₄NaFeO₄, four lithium ions may be released from each molecule in the lithium-supplementing process, where the equation is as follows: Li₄NaFeO₄ → 4Li⁺ + 4e⁻ + NaFeO₂ + O₂. All lithium ions in the lithium-supplementing material are used for supplementing lithium to the cell system. Meanwhile, after the lithium supplement by the lithium-supplementing material, the product is NaFeO₂. Compared to Li, Na is less expensive, so even if Na is merely used as a structural support, there will be no significant waste. In other words, thanks to the lithium-supplementing material provided in the present disclosure, the lithium-supplementing effect cannot be lost, the cost of the lithium-supplementing material can be significantly reduced, the high cost-effective lithium-supplementing material can be formed, and the price threshold of the lithium-supplementing material can be lowered. Therefore, it is conducive to the promotion of cathode lithium-supplementing additive and the development and progress of the new energy industry. On the other hand, since each of the atomic radius of Na and the atomic radius of K is larger than the atomic radius of Li, and the small-volume lithium atoms that are unable to participate in the lithium-supplementing process are replaced with large-volume Na and/or K atoms, during the preparation of the lithium-supplementing material, it is more conducive for lithium to enter the reaction system to form the Liₓ₋ₐAₐM_{y}O_{z} structure. Meanwhile, during the use of the lithium-supplementing material, Na with the large atomic radius and K with the large atomic radius make it easier for lithium to be deintercalated to perform lithium supplementation.

It is worth noting that deintercalation and non-deintercalation of lithium described in the present disclosure are both based on the charging and discharging voltage of the cell. Generally, the charging and discharging voltage of a cell containing a Li₅FeO₄ lithium-supplementing material is generally 4.3 V. At 4.3 V, only four lithium ions can be deintercalated from Li₅FeO₄. If the final lithium needs to be deintercalated, the voltage needs to be increased to 5 V or more. However, the voltage of 5 V or more is not the charging and discharging voltage of the cell under normal conditions. In the present disclosure, only the deintercalation situation of lithium ions under the normal charging and discharging voltage of the cell is considered.

Since the mass of Na and K is larger than the mass of Li, the increase of the Na and K content in the lithium-supplementing material means that the mass of the lithium-supplementing material will increase. In practical application, the content of Na and K can be selectively applied according to practical requirements to balance the price and mass of the lithium-supplementing material. In other words, when the lithium-supplementing material is applied to a product without considering mass, the Na and K content can be relatively increased. For an application scenario in which a product needs to be miniaturized or weight-reduced, the Na and K content may be reduced.

In some specific implementations, Amay include at least one member selected from, but is not limited to, the group consisting of Na, K, aluminum (Al), and iron (Fe). The chemical formula of the lithium-supplementing material may be Li₅₋₃ₐAlₐFeO₄, Li₅₋₃ₐAlₐFe_{b1}Al_{b2}O₄, Li₆₋₃ₐAlₐMnO₄, Li₆₋₃ₐAlₐCoO₄, Li₆₋₃ₐAlₐZnO₄, Li₅₋ₙₐAlₐ₁Naₐ₂FeO₄, Li₆₋ₙₐAlₐ₁Naₐ₂MnO₄, Li₆₋ₙₐAlₐ₁Naₐ₂CoO₄, Li₆₋ₙₐAlₐ₁Naₐ₂ZnO₄, Li₅₋ₙₐAlₐ₁Naₐ₂Fe_{b1}Al_{b2}O₄, Li₅₋ₙₐAlₐ₁Kₐ₂FeO₄, Li₅₋ₙₐAlₐ₁Kₐ₂Fe_{b1}Al_{b2}O₄, Li₆₋ₙₐAlₐ₁Kₐ₂MnO₄, Li₆₋ₙₐAlₐ₁Kₐ₂CoO₄, Li₆₋ₙₐAlₐ₁Kₐ₂ZnO₄, Li₆₋₃ₐFeₐMnO₄, Li₆₋₃ₐFeₐCoO₄, Li₆₋₃ₐFeₐZnO₄, Li₆₋ₙₐFeₐ₁Naₐ₂MnO₄, Li₆₋ₙₐFeₐ₁Naₐ₂CoO₄, Li₆₋ₙₐFeₐ₁Naₐ₂ZnO₄, Li₆₋ₙₐFeₐ₁Kₐ₂MnO₄, Li₆₋ₙₐFeₐ₁Kₐ₂CoO₄, or Li₆₋ₙₐFeₐ₁Kₐ₂ZnO₄, and the like. In the above chemical formula, a1 + a2 = a, n is an average valence state, and b1 + b2 = 1. For example, regarding Li₆₋ₙₐAlₐ₁Naₐ₂MnO₄, n is an average valence state of Al and Na, where the number of Al is a1 and the number of Na is a2.

In an implementation, the chemical formula of the lithium-supplementing material is Li₅₋ₐAₐMO₄, a ≤ 1, A includes at least one member selected from the group consisting of Na and K, and M includes at least one member selected from the group consisting of Fe, cobalt (Co), nickel (Ni), manganese (Mn), Al, chromium (Cr), gallium (Ga), indium (In), lanthanum (La), and bismuth (Bi). In the lithium-supplementing material such as Li₅MO₄, only one lithium is unable to be deintercalated, that is, only one lithium is unable to participate in the lithium-supplementing process. In the present disclosure, at least a part of lithium that is unable to be deintercalated from Li₅MO₄ is replaced with Na and/or K atoms, so that the prepared lithium-supplementing material Li₅₋ₐAₐMO₄ can have a good lithium-supplementing effect. Meanwhile, the cost of the lithium-supplementing material is greatly reduced. During use of the lithium-supplementing material, it is easier for lithium to be deintercalated from the lithium-supplementing material to perform lithium supplementation.

In an implementation, 0 < a ≤ 0.5, 0.5 ≤ a ≤1, 0.1 ≤ a ≤ 0.2, 0.25 ≤ a ≤ 0.5, 0.3 ≤ a ≤ 0.6, 0.4 ≤ a ≤ 0.8, or 0.45 ≤ a ≤ 0.65.

In an implementation, a may be 1, 0.9, 0.8, 0.7, 0.6, 0.5, 0.4, 0.3, 0.2, 0.1, or 0.05.

In an implementation, the chemical formula of the lithium-supplementing material may be Li₄NaFeO₄, Li₄KFeO₄, Li₄NaNiO₄, Li₄KMnO₄, Li_{4.5}Na_{0.5}FeO₄, Li_{4.5}K_{0.5}CoO₄, Li₄Na_{0.5}K_{0.5}NiO₄, Li₄Na_{0.5}K_{0.5}FeO₄, Li₄Na_{0.8}K_{0.2}FeO₄, Li_{4.2}Na_{0.5}K_{0.3}FeO₄, Li_{4.4}K_{0.6}CrO₄, Li_{4.6}Na_{0.4}AlO₄, or Li_{4.8}Na_{0.2}CrO₄.

In an implementation, an intrinsic density of the lithium-supplementing material ranges from 2 g/cm³ to 3.5 g/cm³. The intrinsic density of the lithium-supplementing material is equal to the mass of the lithium-supplementing material divided by the volume of the non-pore lithium-supplementing material, that is, the compacted density of the lithium-supplementing material. When the intrinsic density is too large or too small, it is not conducive to the intercalation and deintercalation of lithium ions. In this implementation, the intrinsic density of the lithium-supplementing material is designed to range from 2 g/cm³ to 3.5 g/cm³, so that a unit volume of the lithium-supplementing material contains more lithium, which can be used to supplement lithium ions for the cell. Meanwhile, it is easier for lithium to be deintercalated from the lithium-supplementing material to perform lithium supplementation.

In an implementation, the intrinsic density of the lithium-supplementing material ranges from 2 g/cm³ to 3 g/cm³.

In an implementation, the intrinsic density of the lithium-supplementing material ranges from 2.5 g/cm³ to 3.5 g/cm³.

In an implementation, the intrinsic density of the lithium-supplementing material may be 2 g/cm³, 2.2 g/cm³, 2.4 g/cm³, 2.6 g/cm³, 2.8 g/cm³, 3 g/cm³, 3.2 g/cm³, 3.4 g/cm³, or 3.5 g/cm³.

In an implementation, a bandgap energy of the lithium-supplementing material ranges from 1 eV to 4 eV. The bandgap energy refers to a bandgap width, that is, the lowest energy at which valence electrons in the lithium-supplementing material transition from a valence band to a conduction band. In this implementation, the bandgap energy of the lithium-supplementing material is designed to range from 1 eV to 4 eV, so that the lithium-supplementing material has greater conductivity and lithium-ion diffusion coefficient.

In an implementation, the bandgap energy of the lithium-supplementing material ranges from 1 eV to 2 eV.

In an implementation, the bandgap energy of the lithium-supplementing material ranges from 2 eV to 3 eV.

In an implementation, the bandgap energy of the lithium-supplementing material ranges from 3 eV to 4 eV.

In an implementation, the bandgap energy of the lithium-supplementing material ranges from 1 eV to 3 eV.

In an implementation, the bandgap energy of the lithium-supplementing material ranges from 2 eV to 4 eV.

In an implementation, the bandgap energy of the lithium-supplementing material may be 2 eV, 2.5 eV, 3 eV, 3.5 eV, or 4 eV.

In an implementation, a unit cell volume of the lithium-supplementing material ranges from 300 Å³ to 500 Å³. The unit cell is the most basic geometrical unit constituting a crystal. In this implementation, the unit cell of the lithium-supplementing material consists of forty atoms.

In an implementation, the unit cell volume of the lithium-supplementing material ranges from 300 Å³ to 400 Å³.

In an implementation, the unit cell volume of the lithium-supplementing material ranges from 400 Å³ to 500 Å³.

In an implementation, the unit cell volume of the lithium-supplementing material may be 300 Å³, 350 Å³, 400 Å³, 450 Å³, or 500 Å³.

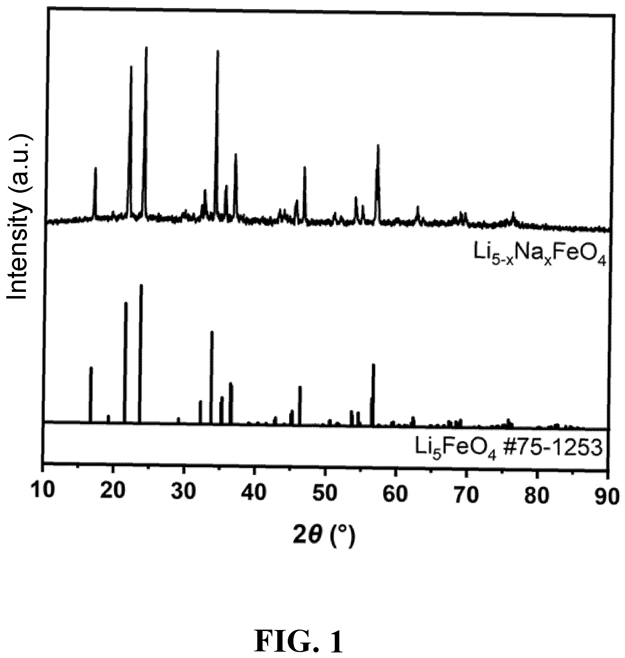

Reference can be made to FIG. 1, which an X-ray Diffraction (XRD) spectrum of a lithium-supplementing material that is provided in an implementation of the present disclosure and Li₅FeO₄. In an implementation, a crystal structure of the lithium-supplementing material is identical to a crystal structure of Li₅MO₄. The crystal structure of Li₅MO₄ is an anti-fluorite structure, and belongs to an orthorhombic crystal system and a Pbca space and point group. However, the crystal structure of the lithium-supplementing material Li₅₋ₐAₐMO₄ in the present disclosure is identical to the crystal structure of Li₅MO₄, that is, the lithium-supplementing material Li₅₋ₐAₐMO₄ also has an anti-fluorite structure, and Li₅₋ₐAₐMO₄ crystal belongs to an orthorhombic crystal system and a Pbca space and point group. Taking Li₅FeO₄ as an example, it can be seen from FIG. 1 that characteristic peaks of the lithium-supplementing material in the present disclosure are highly consistent with characteristic peaks of Li₅FeO₄, so that the crystal structure of the lithium-supplementing material in the present disclosure is identical to the crystal structure of Li₅FeO₄. This indicates that after at least a part of lithium unable to be deintercalated from Li₅FeO₄ is replaced with Na and/or K atoms, the prepared lithium-supplementing material Li₅₋ₐAₐFeO₄ does not change the atomic connection relationship and the construction in the Li₅FeO₄, and the lithium-supplementing material Li₅₋ₐAₐFeO₄ still has a similar lithium-supplementing effect as Li₅FeO₄ in the absence of the part of lithium.

In an implementation, the chemical formula of the lithium-supplementing material is Li₄AMO₄. A particle size of the lithium-supplementing material ranges from 0.1 µm to 100 µm. The chemical formula of the lithium-supplementing material may be Li₄NaMO₄, Li₄KMO₄, or Li₄Naₐ₁Kₐ₂MO₄, where a1 + a2 = 1, and 0 < a1 < 1 and 0 < a2 < 1.

The particle size of the lithium-supplementing material ranging from 0.1 µm to 100 µm may mean that the average particle size of all particles in the lithium-supplementing material ranges from 0.1 µm to 100 µm, or mean that the maximum particle size of all the particles in the lithium-supplementing material is 100 µm and the minimum particle size of all the particles in the lithium-supplementing material is 0.1 µm. If the particle size of the lithium-supplementing material is too small, the lithium-supplementing material tends to agglomerate, so that lithium in the lithium-supplementing material is hard to be deintercalated when the anode is supplemented with active lithium, thereby reducing the effect of the lithium-supplementing material. However, when the particle size of the lithium-supplementing material is too large, the dispersibility of the lithium-supplementing material is poor, which is not conducive to the slurry configuration of the lithium-supplementing material. In addition, when the lithium-supplementing material is coated on a cathode of a cell, an aluminum foil is easily scratched due to the large particle size of the lithium-supplementing material. In this implementation, the particle size of the lithium-supplementing material is controlled to be between 0.1 µm and 100 µm, so that the quick deintercalation of lithium is ensured, and the dispersibility of the lithium-supplementing material can be improved, thereby facilitating the use of the lithium-supplementing material and protecting the electrode.

In an implementation, the particle size of the lithium-supplementing material may range from 0.1 µm to 10 µm, 0.1 µm to 50 µm, 1 µm to 20 µm, 10 µm to 25 µm, 10 µm to 80 µm, 20 µm to 90 µm, 30 µm to 50 µm, 40 µm to 60 µm, 50 µm to 75 µm, 60 µm to 100 µm, 70 µm to 100 µm, 0.5 µm to 5 µm, or 5 µm to 25 µm.

In an implementation, the particle size of the lithium-supplementing material may be 0.1 µm, 0.5 µm, 1 µm, 5 µm, 10 µm, 15 µm, 25 µm, 30 µm, 35 µm, 40 µm, 45 µm, 50 µm, 60 µm, 70 µm, 80 µm, 90 µm, or 100 µm.

In an implementation, a minimum deintercalation voltage of the lithium-supplementing material is lower than a minimum deintercalation voltage of Li₅MO₄. The minimum deintercalation voltage of the lithium-supplementing material refers to a minimum voltage for deintercalation of four lithium ions from the lithium-supplementing material. The minimum deintercalation voltage of Li₅MO₄ refers to a minimum voltage for deintercalation of four lithium ions from Li₅MO₄. In Li₅MO₄, since the ionic radius of lithium that is unable to be deintercalated is small, it is difficult for the remaining four lithium to be deintercalated. However, in this implementation, each of the ionic radius of Na and the ionic radius K is larger than the ionic radius of Li, and small-volume lithium atoms that are unable to participate in the lithium-supplementing process are replaced with large-volume Na and/or K atoms, so that during the use of the lithium-supplementing material Li₄AMO₄, the large ionic radius of Na and the large ionic radius of K make it easier for lithium to be deintercalated, that is, the minimum deintercalation voltage of the lithium-supplementing material provided in the present disclosure is lower than the minimum deintercalation voltage of Li₅MO₄.

In an implementation, an outer surface of each of at least some of lithium-supplementing materials is coated with a first coating layer. The first coating layer is configured to isolate the lithium-supplementing material from moisture and carbon dioxide. The first coating layer can protect the lithium-supplementing material, and improve the stability of the lithium-supplementing material, so as ensure the lithium-supplementing effect of the lithium-supplementing material. Meanwhile, the first coating layer can ensure the lithium-supplementing stability and the dispersion uniformity of the lithium-supplementing material in the electrode active slurry and the active layer, and good processability. The first coating layer may be located on a part of an outer surface of the lithium-supplementing material, or may be coated on an entire outer surface of the lithium-supplementing material, which is not limited in the present disclosure.

In an implementation, a material of the first coating layer material includes at least one of a ceramic, a high polymer, or a carbon material. The ceramic includes at least one of Al₂O₃, SiO₂, boehmite, Si₃N₄, SiC, or BN. The polymer includes one or more of polyvinylidene fluoride, sodium alginate, sodium carboxymethyl cellulose, polyacrylic acid, polyacrylate, polyacrylonitrile, polyamide, polyimide, polyvinylpyrrolidone, polyethylene oxide (PEO), polypyrrole (PPy), polytetrafluoroethylene (PTFE), polyurethane (PU), sodium carboxymethyl cellulose, or polyacrylic acid. The carbon material includes at least one of graphene, carbon nanotubes, amorphous carbon, graphite, or carbon black.

In an implementation, an outer surface of each of at least some of lithium-supplementing materials is coated with a second coating layer. The second coating layer is configured to enhance ion conductivity of the lithium-supplementing material. The second coating layer facilitates the outward transport of lithium ions in the lithium-supplementing material. Meanwhile, the second coating layer can also play an auxiliary role in enhancing ion transport inside the electrode. The second coating layer may have a dense structure or a loose structure, and may be fully coated on the outer surface of the lithium-supplementing material or not fully coated on the outer surface of the lithium-supplementing material.

In an implementation, a material of the second coating layer includes at least one of a perovskite-type solid electrolyte, a sodium super ionic conductor (NASICON)-type solid electrolyte, a garnet-type solid electrolyte, or a polymer-type solid electrolyte.

In an implementation, an outer surface of each of at least some of lithium-supplementing materials is coated with a third coating layer. The third coating layer is configured to enhance electronic conductivity of the lithium-supplementing material. The third coating layer facilitates the reduction of the internal impedance of the electrode. Meanwhile, the third coating layer can also play an auxiliary role of a conductive agent inside the electrode. The third coating layer may have a dense structure or a loose structure, and may be fully coated on the outer surface of the lithium-supplementing material or not fully coated on the outer surface of the lithium-supplementing material.

In an implementation, the outer surface of the lithium-supplementing material is coated with at least one of the first coating layer, the second coating layer, or the third coating layer.

In an implementation, the outer surface of the lithium-supplementing material is coated with the first coating layer, the second coating layer, and the third coating layer. In this case, the first coating layer, the second coating layer, and the third coating layer may be sequentially coated on the outer surface of the lithium-supplementing material, or the second coating layer, the first coating layer, and the third coating layer may be sequentially coated on the outer surface of the lithium-supplementing material, or other forms of coating, which is not limited in the present disclosure.

A preparation method for a lithium-supplementing material is provided in the present disclosure. The preparation method for a lithium-supplementing material includes S1 and S2, specifically including the following.

S1, an A-metal source is mixed with an iron source and a lithium source to obtain a solid I.

S2, under an inert gas atmosphere, the solid I is heated to 800 °C - 900 °C for 12 hours - 36 hours, and the solid I heated is cooled to obtain Liₓ₋ₙₐAₐM_{y}O_{z} after heating.

In an implementation, the A-metal source is at least one of a sodium source or a potassium source. The preparation method for a lithium-supplementing material includes S1-1 and S2-1, specifically including the following.

S1-1, at least one of a sodium source or a potassium source is mixed with an iron source and a lithium source to obtain a solid I.

S2-1, under an inert gas atmosphere, the solid I is heated to 800 °C - 900 °C for 12 hours - 36 hours, and the solid I heated is cooled to obtain Liₓ₋ₐAₐFeO₄ after heating.

In S1-1, raw materials such as an iron source, a sodium source and/or a potassium source, and a lithium source are mixed evenly, to facilitate the formation of an ordered crystal structure in subsequent sintering. In an implementation, the raw materials may be mixed evenly by means of ball milling. In other implementations, an organic solvent which is anhydrous and volatile may be added to the raw materials, and stirred for a period of time until the organic solvent is volatilized, so as to obtain an evenly mixed solid I.

In an implementation, the iron source includes one of or a combination of at least two of ferric sulfate, ferric nitrate, ferric chloride, ferric citrate, ferric hydroxide, or ferric oxide. In other implementations, the iron source may be a ferrous compound, such as ferrous sulfate, ferrous nitrate, ferrous chloride, ferrous citrate, ferrous hydroxide, ferrous oxide, or other valence states of iron, such as ferroferric oxide, which can be converted into trivalent iron by adding an oxidant during the preparation of the lithium-supplementing material.

In an implementation, the sodium source includes one of or a combination of at least two of sodium chloride, sodium carbonate, sodium hydroxide, sodium bicarbonate, sodium sulfate, sodium nitrate, sodium oxide, or sodium peroxide.

In an implementation, the potassium source includes one of or a combination of at least two of potassium chloride, potassium carbonate, potassium hydroxide, potassium bicarbonate, potassium sulfate, potassium nitrate, or potassium oxide.

In an implementation, the lithium source includes one of or a combination of at least two of lithium hydroxide, lithium oxide, lithium chloride, lithium nitrite, lithium nitrate, lithium oxalate, lithium carbonate, or lithium acetate.

In an implementation, raw materials for preparing the lithium-supplementing material include iron oxide, sodium hydroxide, and lithium hydroxide.

In an implementation, raw materials for preparing the lithium-supplementing material include iron oxide, potassium hydroxide, and lithium hydroxide.

In an implementation, raw materials for preparing the lithium-supplementing material include ferric chloride, sodium chloride, and lithium nitrate.

In an implementation, raw materials for preparing the lithium-supplementing material include iron sulphate, potassium nitrate, and lithium chloride.

In an implementation, raw materials for preparing the lithium-supplementing material include iron nitrate, sodium sulphate, and lithium oxide.

In S2-1, the inert gas atmosphere can form a reaction environment without water and carbon dioxide, so as to prevent an external environment from affecting the preparation of the lithium-supplementing material Liₓ₋ₐAₐFeO₄. In this implementation, the inert gas includes at least one of argon, helium, or neon. In addition, the gas atmosphere in S2 may also be a non-inert gas such as nitrogen, oxygen, etc.

The heating temperature and heating time for the solid I are related to the formation of the lithium-supplementing material Liₓ₋ₐAₐFeO₄ and the formation of the anti-fluorite crystal structure of the lithium-supplementing material Liₓ₋ₐAₐFeO₄. In this implementation, the temperature is controlled to range from 800 °C to 900 °C, and the heating time is controlled to range from 12 hours to 36 hours, so that the lithium-supplementing material Liₓ₋ₐAₐFeO₄ with an anti-fluorite structure can be prepared. The heating time may refer to a duration for which the solid I is kept at a preset temperature after being heated to the preset temperature. The heating time may also refer to a duration for which the solid I is heated from the beginning to the end of the heating.

In an implementation, the heating temperature ranges from 800 °C to 850 °C, 810 °C to 860 °C, 820 °C to 870 °C, 830 °C to 880 °C, 840 °C to 890 °C, 850 °C to 895 °C, 860 °C to 880 °C, 870 °C to 890 °C, 815 °C to 855 °C, or 820 °C to 840 °C.

In an implementation, the heating temperature is 800 °C, 810 °C, 820 °C, 830 °C, 840 °C, 850 °C, 860 °C, 870 °C, 880 °C, 890 °C, or 900 °C.

In an implementation, the heating time may range from 12 hours to 24 hours, 14 hours to 26 hours, 16 hours to 28 hours, 18 hours to 30 hours, 20 hours to 32 hours, 22 hours to 34 hours, 24 hours to 36 hours, 20 hours to 28 hours, 22 hours to 26 hours, or 23 hours to 25 hours.

In an implementation, the heating time may be 12 hours, 14 hours, 16 hours, 18 hours, 20 hours, 22 hours, 24 hours, 26 hours, 28 hours, 30 hours, 32 hours, 34 hours, or 36 hours.

In an implementation, the solid I is heated to 800 °C for 36 hours.

In an implementation, the solid I is heated to 820 °C for 30 hours.

In an implementation, the solid I is heated to 850 °C for 24 hours.

In an implementation, the solid I is heated to 870 °C for 20 hours.

In an implementation, the solid I is heated to 900 °C for 18 hours.

In an implementation, a heating rate for heating the solid I ranges from 1 °C/min to 10 °C/min.

In an implementation, the heating rate for heating the solid I ranges from 1 °C/min to 5 °C/min, 2 °C/min to 6 °C/min, 3 °C/min to 7 °C/min, 4 °C/min to 8 °C/min, 5 °C/min to 9 °C/min, 6 °C/min to 10 °C/min, or 4 °C/min to 6 °C/min.

In an implementation, the heating rate for heating the solid I is 1 °C/min, 2 °C/min, 3 °C/min, 4 °C/min, 5 °C/min, 6 °C/min, 7 °C/min, 8 °C/min, 9 °C/min, or 10 °C/min.

In an implementation, the solid I is heated to 850 °C at a heating rate of 5 °C/min, then kept at 850°C for 24 hours, and then naturally cooled to room temperature, so as to obtain Liₓ₋ₐAₐFeO₄.

In other implementations, the A-metal source may be selected from other metal sources. For example, the A-metal source is selected from an aluminum source, and the preparation method for a lithium-supplementing material includes S1-2 and S2-2, specifically including the following.

S1-2, an aluminum source is fixed with an iron source and a lithium source to obtain a solid I.

S2-2, under an inert gas atmosphere, the solid I is heated to 800 °C - 900 °C for 12 hours to 36 hours, and the solid I heated is cooled after heating, to obtain Liₓ₋₃ₐAlₐFeO₄.

In an implementation, the aluminum source includes one of or a combination of at least two of aluminum chloride, aluminum carbonate, aluminum hydroxide, aluminum bicarbonate, aluminum sulfate, aluminum nitrate, or aluminum oxide.

The present disclosure provides a cathode plate. The cathode plate includes the foregoing lithium-supplementing material, or the cathode plate includes a lithium-supplementing material prepared by the foregoing preparation method for a lithium-supplementing material. In an implementation, the cathode plate further includes a cathode material. The cathode material and the lithium-supplementing material are mixed and then subjected to operations of homogenization, coating, drying, rolling, and cutting, so as to prepare the cathode plate. In an implementation, the cathode plate includes a cathode-sheet body and a lithium-supplementing material. The lithium-supplementing material is coated on an outer surface of the cathode-sheet body, so as to obtain the cathode plate.

In an implementation, the cathode material in the present disclosure is not limited to a phosphate cathode material. In an implementation, the cathode material includes, but is not limited to, lithium iron phosphate, lithium manganese iron phosphate, and a ternary material (lithium nickel cobalt manganese oxide (NCM) and lithium nickel cobalt aluminum oxide (NCA)).

The present disclosure provides a cell. The cell includes the foregoing cathode plate, or the cell includes the foregoing lithium-supplementing material, or the cell includes a lithium-supplementing material prepared by the foregoing preparation method for a lithium-supplementing material.

### Embodiment 1

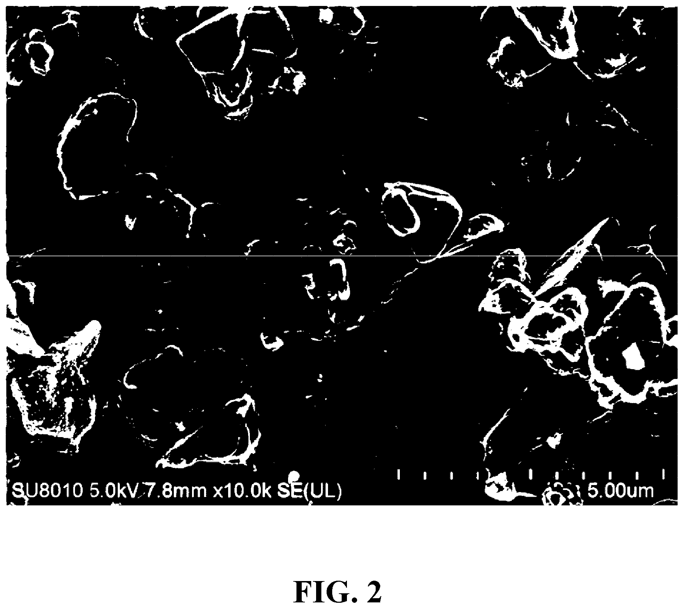

Fe₂O₃, NaOH, and LiOH are provided according to a stoichiometric ratio of 0.5: 0.5: 4.5, and the raw materials are ball-milled and mixed to obtain solid I. Under the protection of an argon atmosphere, the solid I is heated to 850 °C at a heating rate of 5 °C/min, then kept at 850 °C for 24 hours, and then naturally cooled to room temperature, so as to obtain a lithium-supplementing material Li_{4.5}Na_{0.5}FeO₄. A scanning electron microscope pattern of the lithium-supplementing material Li_{4.5}Na_{0.5}FeO₄ is illustrated in FIG. 2.

### Embodiment 2

Fe₂O₃, NaOH, and LiOH are provided according to a stoichiometric ratio of 0.5: 1: 4, and the raw materials are ball-milled and mixed to obtain solid I. Under the protection of the argon atmosphere, the solid I is heated to 850 °C at a heating rate of 5 °C/min, then kept at 850 °C for 24 hours, and then naturally cooled to room temperature, so as to obtain a lithium-supplementing material Li_{4.3}NaFeO₄.

### Embodiment 3

Fe₂O₃, KOH, and LiOH are provided according to a stoichiometric ratio of 0.5: 0.5: 4.5, and the raw materials are ball-milled and mixed to obtain solid I. Under the protection of the argon atmosphere, the solid I is heated to 850 °C at a heating rate of 5 °C/min, then kept at 850 °C for 24 hours, and then naturally cooled to room temperature, so as to obtain a lithium-supplementing material Li_{4.5}K_{0.5}FeO₄.

### Embodiment 4

Fe₂O₃, NaOH, Al(OH)₃, and LiOH are provided according to a stoichiometric ratio of 0.5: 1.7: 0.1: 3, and the raw materials are ball-milled and mixed to obtain solid I. Under the protection of the argon atmosphere, the solid I is heated to 850 °C at a heating rate of 5 °C/min, then kept at 850 °C for 24 hours, and then naturally cooled to room temperature, so as to obtain a lithium-supplementing material Li₃Na_{1.7}Al_{0.1}FeO₄.

### Comparative example 1

Fe₂O₃ and LiOH are provided according to a stoichiometric ratio of 0.5: 5, and the raw materials are ball-milled and mixed to obtain solid I. Under the protection of the argon atmosphere, the solid I is heated to 850 °C at a heating rate of 5 °C/min, then kept at 850 °C for 24 hours, and then naturally cooled to room temperature, so as to obtain a lithium-supplementing material Li₅FeO₄.

The lithium-supplementing material of each of embodiments 1 - 4 and comparative example 1 are prepared into a cell, and relevant performance tests are performed on the cell. The preparation processes and test results of the cell are as follows.

The lithium-supplementing material of each of embodiments 1 - 4 and comparative example 1 is mixed with SP and PVDF at a mass ratio of 95: 2: 3, and ball-milled and stirred for 30 minutes after adding an appropriate amount of NMP solvent. After operations of homogenization, coating, drying, rolling, and cutting, a cathode plate is prepared. The cathode plate is baked in a vacuum oven at 100 °C to remove a trace amount of water. An anode is a lithium metal sheet, an electrolyte is a LiPF₆ solution of 1 mol/L, and a solvent is a mixture of ethylene carbonate (EC) and diethyl carbonate (DEC) at a volume ratio of 1: 1, so that the anode, the electrolyte, and the solvent are assembled into a CR2032-type button lithium-ion cell.

The lithium-ion cell provided in each of embodiments 1 - 4 and comparative example 1 is tested for charge-discharge capacity-per-gram performance according to following methods. The lithium-ion cell is charged to 4.3 V at a rate of 0.1 C with constant current and voltage, and a cut-off current is 0.02 C. Then, the lithium-ion cell is left for 5 minutes, and then discharged to 2.8V at a rate of 0.1 C with a constant current.

The relevant performance test results are shown in Table 1 below.

**Table 1 the performance test results**

| Number | Charge capacity per gram mAh/g | Constant current section mAh/g | Constant voltage section mAh/g | Constant current ratio | Discharge capacity per gram mAh/g | Lithium-supplementing efficiency |
|---|---|---|---|---|---|---|
| Embodiment 1 | 676 | 647 | 31 | 95.71% | 24 | 96.45% |
| Embodiment 2 | 652 | 591 | 61 | 90.64% | 25 | 96.17% |
| Embodiment 3 | 626 | 525 | 101 | 83.86% | 18 | 97.12% |
| Embodiment 4 | 578 | 463 | 115 | 80.10% | 29 | 94.98% |
| Comparative example 1 | 695 | 660 | 35 | 94.96% | 21 | 96.98% |

It can be seen from the comparison of electrochemical properties of embodiments 1 - 3 and comparative example 1 that, since a part of Li in the Li₅FeO₄ material is replaced with Na or K, and the atomic mass of Na and K is heavier than the atomic mass of Li, although there is a certain loss in the lithium-supplementing capacity per gram of the material, the lithium-supplementing capacity per gram is still maintained at a high level.

Meanwhile, the lithium-supplementing efficiency in each of embodiments 1 - 3 can also be maintained above 96%, the lithium-supplementing efficiency in each of embodiments 1 - 3 is comparable to the lithium-supplementing efficiency in comparative example 1, and the lithium-supplementing efficiency in embodiment 3 is slightly higher than the lithium-supplementing efficiency in comparative example 1. This indicates that the strategy of partially replacing Li, which serves a structural support function, with alkali metals such as Na or K in the lithium-supplementing material Li₅FeO₄ can maintain high lithium-supplementing performance, and can significantly reduce the material cost.

It can be found from the electrochemical performance in embodiment 4 that, if too much Li is replaced, the replacing element may occupy a part of active lithium sites intended for the lithium-supplementing effect. As a result, the effective amount of lithium supplementing is lost, causing a significant decrease in the lithium-supplementing capacity per gram and the lithium-supplementing efficiency.

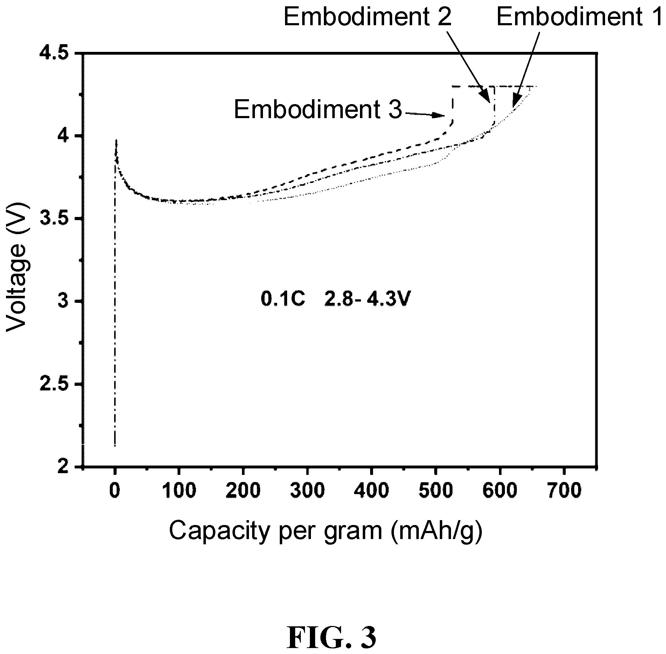

Reference can be made to FIG. 3, which is a charging curve diagram of a lithium-ion cell provided in each of embodiments 1 - 3 and a comparative example 1. It can be seen from FIG. 3 that, during the first charging, the lithium-ion cell provided in each of embodiments 1-3 and comparative example 1 exhibits two voltage platforms around 3.6 V and 3.9 V. At the lowvoltage platform, the lithium-supplementing material may deintercalate two Li⁺. As the lithium-ion cell continues to be charged and reaches the high-voltage platform, the lithium-supplementing material continues to deintercalate another two Li⁺. The voltage then continues to rise until the capacity per gram of the cell remains unchanged. A voltage at a finishing point of the high-voltage platform - that is, a voltage at an inflection point where the capacity per gram no longer changes - is defined as the minimum deintercalation voltage of the lithium-supplementing material (in each of embodiments 1 - 3) or the minimum deintercalation voltage of Li₅MO₄ (in comparative example 1).

The minimum deintercalation voltages of the lithium-supplementing materials in embodiments 1 - 4 are respectively 4.1 V, 4.0 V, 4.1 V, and 4.0 V, while the minimum deintercalation voltage of Li₅MO₄ in comparative example 1 is 4.2 V. In the present disclosure, after at least a part of lithium that is unable to be deintercalated from Li₅MO₄ is replaced with Na and/or K atoms, defects are introduced, and ionic migration channels in a crystal are enlarged. Therefore, the prepared lithium-supplementing materials can realize quick lithium deintercalation, which is more conducive to lithium supplementing for the cell system.

In conclusion, the lithium-supplementing material Liₓ₋ₐAₐM_{y}O_{z} provided in the present disclosure not only maintains good lithium-supplementing effect, but also significantly reduces the cost of the lithium-supplementing material, resulting in a high cost-effective lithium-supplementing material. In addition, the lithium in the lithium-supplementing material provided in the present disclosure is easier to be deintercalated to perform lithium supplementation, with a lower voltage platform and a narrower voltage window. Therefore, the lithium-supplementing material provided in the present disclosure has broader and more flexible application scenarios, and offers a higher application value.

When the lithium-supplementing material used as a cathode lithium-supplementing additive is applied to a cell, a preparation method for the cell is as follows.
1) Preparation of a cathode plate: a lithium iron phosphate cathode, a lithium-supplementing material of embodiment 1, SP, and PVDF are mixed at a mass ratio of 93: 2: 2: 3 to prepare a cathode plate; and for a comparative sample, a lithium iron phosphate cathode, SP, and PVDF are mixed at a mass ratio of 95: 2: 3 to prepare a cathode plate.
2) Anode sheet: graphite is used as an anode material.
3) Separator: a polypropylene (PP) separator.
4) Electrolyte: a LiPF₆ solution of 1 mol/L, where a solvent is a mixture of EC and DEC at a volume ratio of 1: 1.
5) Assembly of secondary cell: eleven double-sided anode sheets are matched with ten double-sided cathode plates by adopting a lamination process.

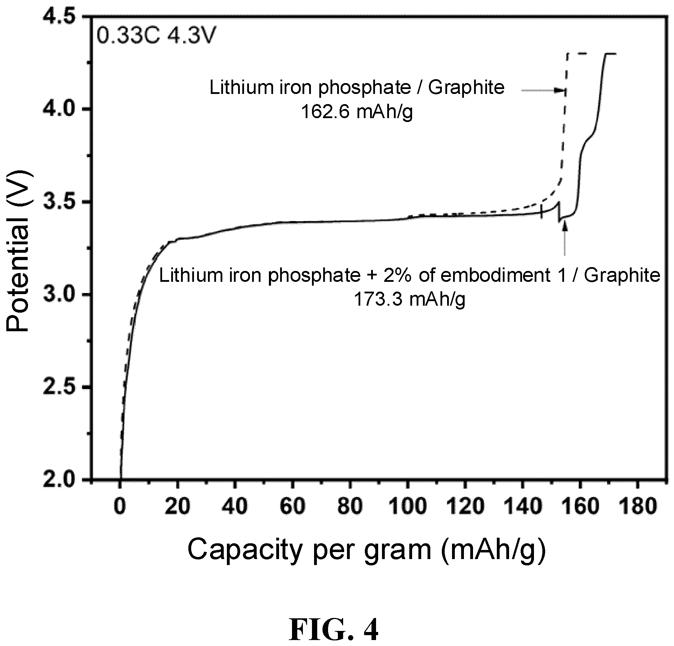

The cathode plate, the anode sheet, the electrolyte, and the separator that are mentioned above are assembled into a lithium-ion pouch cell according to the assembly requirements of the lithium-ion cell. The lithium-ion pouch cell is charged to 3.5 V at a rate of 0.33 C with constant current and is left for 5 min, and are then continuously charged to 4.3 V at a rate of 0.33 C with constant current and constant voltage, where a cut-off current is 0.1 C. The resulting charging curve diagram of the cell is illustrated in FIG. 4.

Reference can be made to FIG. 4, which is a charging curve diagram of a full cell provided in the first embodiment of the present disclosure. It can be seen from FIG. 4 that, during first charging, the capacity per gram of the pure lithium iron phosphate cell for the first charge is 162.6 mAh/g, while the capacity per gram of the lithium iron phosphate cell added with 2% of the lithium-supplementing material of embodiment 1 is 173.3 mAh/g, playing a good role in lithium supplementing.

The lithium-supplementing material, the preparation method therefor, and the application thereof provided in embodiments of the present disclosure are described in detail above. Specific examples are used in the present disclosure to illustrate the principle and embodiments of the present disclosure. The description of the above embodiments is only used to help to understand the method of the present disclosure and the core idea thereof. Meanwhile, those of ordinary skill in the art may make modifications to specific embodiments and application scopes according to the idea of the present disclosure. In conclusion, the content of the description shall not be construed as a limitation to the present disclosure.

## Claims

1. A lithium-supplementing material, wherein a chemical formula of the lithium-supplementing material is Liₓ₋ₙₐAₐM_{y}O_{z}, A is selected from other metal elements except lithium (Li), M is selected from at least one transition metal element, and 1 < x ≤ 8, y > 0, 0 < z < 6, 1 ≤ n ≤ 4, 0 < a ≤ 2.

2. The lithium-supplementing material of claim 1, wherein the chemical formula of the lithium-supplementing material is Li₅₋ₐAₐMO₄, a ≤ 1, A comprises at least one member selected from the group consisting of sodium (Na) and potassium (K), and M comprises at least one member selected from the group consisting of iron (Fe), cobalt (Co), nickel (Ni), manganese (Mn), aluminum (Al), chromium (Cr), gallium (Ga), indium (In), lanthanum (La), and bismuth (Bi).

3. The lithium-supplementing material of claim 2, wherein a crystal structure of the lithium-supplementing material is identical to a crystal structure of Li₅MO₄.

4. The lithium-supplementing material of claim 2, wherein a unit cell volume of the lithium-supplementing material ranges from 300 Å³ to 500 Å³.

5. The lithium-supplementing material of claim 2, wherein a unit cell of the lithium-supplementing material consists of forty atoms.

6. The lithium-supplementing material of claim 2, wherein an intrinsic density of the lithium-supplementing material ranges from 2 g/cm³ to 3.5 g/cm³, and a bandgap energy of the lithium-supplementing material ranges from 1 eV to 4 eV.

7. The lithium-supplementing material of claim 2, wherein the chemical formula of the lithium-supplementing material is Li₄AMO₄.

8. The lithium-supplementing material of claim 7, wherein a minimum deintercalation voltage of the lithium-supplementing material is lower than a minimum deintercalation voltage of Li₅MO₄, the minimum deintercalation voltage of the lithium-supplementing material refers to a minimum voltage for deintercalation of four lithium ions from the lithium-supplementing material, and the minimum deintercalation voltage of Li₅MO₄ refers to a minimum voltage for deintercalation of four lithium ions from Li₅MO₄.

9. The lithium-supplementing material of claim 1, wherein a particle size of the lithium-supplementing material ranges from 0.1 µm to 100 µm.

10. The lithium-supplementing material of claim 1, wherein an outer surface of the lithium-supplementing material is coated with at least one of a first coating layer, a second coating layer, or a third coating layer; the first coating layer is configured to isolate the lithium-supplementing material from moisture and carbon dioxide, the second coating layer is configured to enhance ionic conductivity of the lithium-supplementing material, and the third coating layer is configured to enhance electronic conductivity of the lithium-supplementing material.

11. The lithium-supplementing material of claim 10, wherein the first coating layer comprises at least one of a ceramic, a high polymer, or a carbon material.

12. The lithium-supplementing material of claim 10, wherein the second coating layer comprises at least one of a perovskite-type solid electrolyte, a sodium super ionic conductor (NASICON)-type solid electrolyte, a garnet-type solid electrolyte, or a polymer-type solid electrolyte.

13. The lithium-supplementing material of claim 10, wherein the outer surface of the lithium-supplementing material is sequentially coated with the first coating layer, the second coating layer, and the third coating layer.

14. The lithium-supplementing material of claim 10, wherein the outer surface of the lithium-supplementing material is sequentially coated with the second coating layer, the first coating layer, and the third coating layer.

15. A preparation method for a lithium-supplementing material, comprising:
mixing an A-metal source with an iron source and a lithium source to obtain a solid I; and
under an inert gas atmosphere, heating the solid I to 800 °C - 900 °C for 12 hours - 36 hours, and cooling the solid I heated to obtain Liₓ₋ₙₐAₐM_{y}O_{z} after heating.

16. The preparation method for a lithium-supplementing material of claim 15, wherein a heating rate for heating the solid I ranges from 1 °C/min to 10 °C/min.

17. The preparation method for a lithium-supplementing material of claim 15, wherein the iron source comprises one of or a combination of at least two of ferric sulfate, ferric nitrate, ferric chloride, ferric citrate, ferric hydroxide, or ferric oxide;
the A-metal source comprises one of or a combination of at least two of sodium chloride, sodium carbonate, sodium hydroxide, sodium bicarbonate, sodium sulfate, sodium nitrate, sodium oxide, potassium chloride, potassium carbonate, potassium hydroxide, potassium bicarbonate, potassium sulfate, potassium nitrate, or potassium oxide; and
the lithium source comprises one of or a combination of at least two of lithium hydroxide, lithium oxide, lithium chloride, lithium nitrite, lithium nitrate, lithium oxalate, lithium carbonate, or lithium acetate.

18. A cathode plate, comprising the lithium-supplementing material of any one of claims 1 to 14, or comprising a lithium-supplementing material prepared by the preparation method for a lithium-supplementing material of any one of claims 15 to 17.

19. A cell, comprising the cathode plate of claim 18, or comprising the lithium-supplementing material of any one of claims 1 to 14, or comprising a lithium-supplementing material prepared by the preparation method for a lithium-supplementing material of any one of claims 15 to 17.
